# EUROPEAN PATENT SPECIFICATION

(11) **EP 0 374 862 B1**
(45) Date of publication and mention of the grant of the patent: **26.04.1995**
(21) Application number: 89123509.5
(22) Date of filing: 20.12.1989
(51) Int. Cl.: F22B 1/28, A47J 27/04, F24C 15/00

(54) **Steam generator for cooking oven with much simplified maintenance**
Dampferzeuger für Kochöfen mit einfacher Wartung
Générateur de vapeur pour four de cuisson d'un entretien simplifié

(30) Priority: 21.12.1988 IT 2304988
(43) Date of publication of application: 27.06.1990
(73) Proprietor: MERLONI ELETTRODOMESTICI S.p.A., I-60044 Fabriano (AN) (IT)
(72) Inventor: Pesarini, Andrea, I-60100 Ancona (IT)
(74) Representative: Dini, Roberto, Dr. Ing.

(56) References cited:
- CH-A- 652 293
- FR-A- 2 306 400
- FR-A- 2 391 309
- US-A- 2 308 765
- US-A- 3 639 725

## Description

The subject of the present invention is a steam generator for a cooking oven, in particular of the household type.

As known, in order to obtain steam cooking, in a number of ovens there is provided a steam generator which delivers steam in the internal cooking chamber of the oven.

Steam generators for household ovens may be divided in two categories, and, more precisely, in overheated and atmospheric pressure steam generators.

Such known steam generators show inconveniences particularly as their efficiency is concerned. In fact in use and due to calcareous incrustations, the boiler efficiency notably decreases until a boiler substitution becomes sometimes necessary.

The problem of calcareous incrustations is particularly important in such generators because the produced steam comes in contact with foods and therefore it is not allowed to employ chemicals to lessen the hardness of the water with which the boiler is filled.

Moreover, also cleaning operations, to periodically take away incrustations, are made difficult or even impossible, due to the construction type of known generators.

Indeed, in known overheated steam generators, due to the high working pressure, the boiler is very heavy and normally the inside is not at all available for inspection.

Also in the case of atmospheric pressure steam generators, usually the boiler is sealed, but, even when it is available for inspection, cleaning is so hard that often it is more convenient to substitute the whole boiler.

From FR-A-2 306 400 is known a steam generator for irons, having a boiler horizontally arranged, in which an access opening, closed by a plug, is defined in a longitudinal end of the boiler.

In the cited solution the user must pay particular attention for the removal of the plug, in order to avoid residual water contained in the boiler from uncontrollably exiting.

The main object of the present invention is to avoid the above said inconveniences indicating a steam generator for cooking ovens, particularly of the household type, having a boiler allowing easy and quick cleaning.

With this aim in view, an object of the present invention is to indicate a steam generator having a boiler which, in case of cleaning, only needs simple disassembly operations, so that maintenance might be performed even by not specialized people.

Another object of the invention is to indicate a steam generator showing adequate safety during maintenance operations.

These objects, are obtained by a steam generator for a cooking oven comprising a boiler having heating means and defining internally a vaporizing chamber which has a water inlet pipe, a steam outlet and an access opening defined in a longitudinal end of the vaporizing chamber and watertightly closed in use by way of a plug, whereby the inside of said vaporizing chamber extends inwardly from the inner portion of said plug, characterised in that
- in the lowermost part of said vaporizing chamber a drain outlet is defined in the zone of the vaporizing chamber proximate to said access opening, the inner portion of said plug extending inwardly beyond said drain outlet;
- said plug has sealing means cooperating with the internal wall of the vaporizing chamber, whereby said drain outlet is defined between said access opening and said sealing means;
- in the outer end face of said plug a grip or grip and lever arrangement is provided for manoeuvring the position of the plug and thereby of a connection channel formed in the inner portion of said plug or for operating said sealing means in order to connect said drain outlet with the inside of the vaporizing chamber while said plug remains in said access opening.

Further characteristics and advantages of the invention will be clear from the description of a preferred but not exclusive embodiment of the steam generator according to the invention, which is shown as an example in the attached drawings, wherein:
figure 1 shows a perspective view of a boiler of a steam generator with the plug removed;
figure 2 shows an enlarged perpective view of the plug;
figure 3 shows a perspective view of some components of the plug according to the invention;
figures 4 and 5 show enlarged vertical sections of the boiler end where the plug is located, during working time and at the start of maintenance operation, respectively;
figure 6 shows an enlarged perspective view of a second plug embodiment;
figure 7 shows the outer side of the plug of figure 6;
figures 8 and 9 show enlarged vertical sections of the boiler end where the plug according to the second embodiment is located, during working time and at the start of maintenance operation, respectively; and
figure 10 shows a section along the X-X axis of figure 8; and
figure 11 shows a section along the XI-XI axis of figure 9.

Referring to figures from 1 to 5, the steam generator according to the invention, indicated as a whole with reference numeral 1, comprises a boiler 2 with a body showing heating means, as, for instance, an electrical resistance 3, and defining internally a vaporizing chamber 4. Vaporizing chamber 4 shows an inlet, to which a water inlet pipe 5 is connected, and an outlet, to which a pipe 6 is connected, through which the generated steam is fed to the cooking chamber of the oven not shown for the sake of simplicity.

Boiler 2 shows an elongated shape and is arranged horizontally; according to the invention in the boiler body there is defined an opening 7 which is closed by a plug 8 which is removable in order to allow the access to the vaporizing chamber in case of the necessary cleaning operations, particularly with the aim to remove calcareous incrustations from the walls.

Advantageously, opening 7 is axially defined in correspondence of one longitudinal end of the boiler so that cleaning operations are made very easy and quick; moreover, near to that end the vaporizing chamber shows a substantially cylindrical, or slightly conical shape, widening towards the outside, in order to accomodate a suitably shaped plug 8.

Plug 8 is provided with hydraulic sealing means, engaging with a part of the vaporizing chamber which is far from the longitudinal end of the boiler where the plug 8 is inserted and, between said part and said logitudinal end, there is defined the intake of a draining channel 11, which may be made to communicate with the vaporizing chamber where there is contained the water, in order to drain the remaining water before the plug 8 is removed from opening 7.

Plug 8 may be of the type with sealing means 9 expandable in radial direction, so that it is possible to controllably engage or disengage them with the walls of vaporizing chamber 4.

More particularly, plug 8 may be formed by two parts, 8a and 8b respectively, one of which, part 8a in the case shown, holds the other, which can slide in a direction which is parallel to its axis.

Sealing means may consist in this case of an elastic ring which can be deformed, inserted between parts 8a and 8b into a suitable seating 12, which is defined by said parts in such a way that the reciprocal approach of parts 8a and 8b produces an axial compression and consequently a radial expansion of the sealing, so realizing the tight fitting of it to the walls of the vaporizing chamber 4. In order to obtain the to and fro movement of parts 8a and 8b, it is possible in a known way to provide for an eccentric lever 13, pivotally connected to a stem 14, axially piercing part 8a and fastened to part 8b. Eccentric lever 13 engages the outside of plug and when turned in respect of stem 14 causes the axial compression or the relaxation of the sealing.

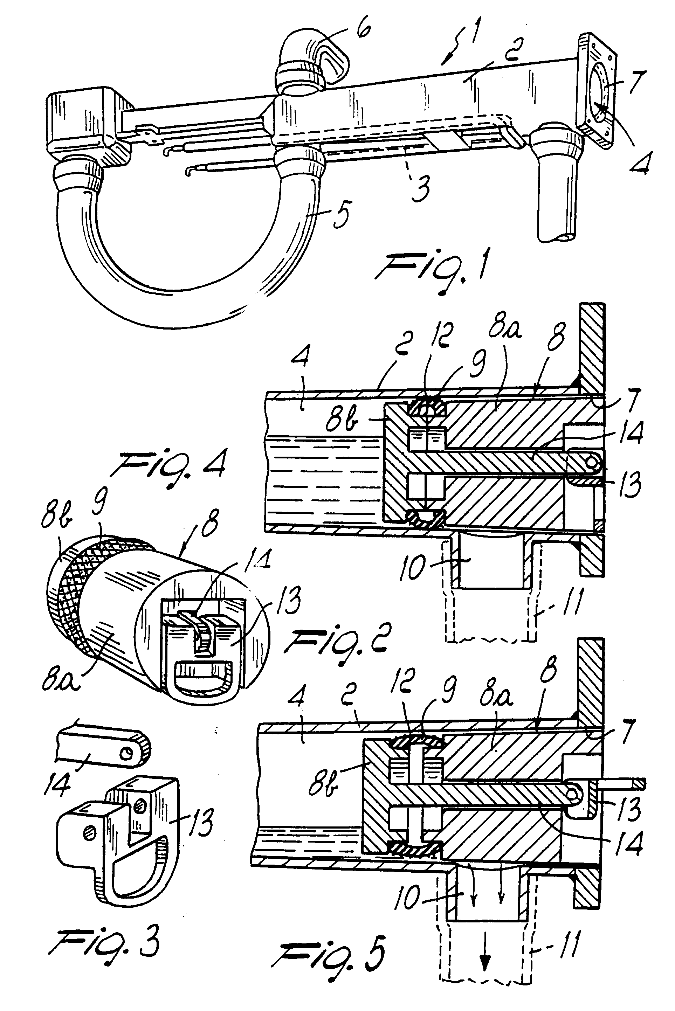

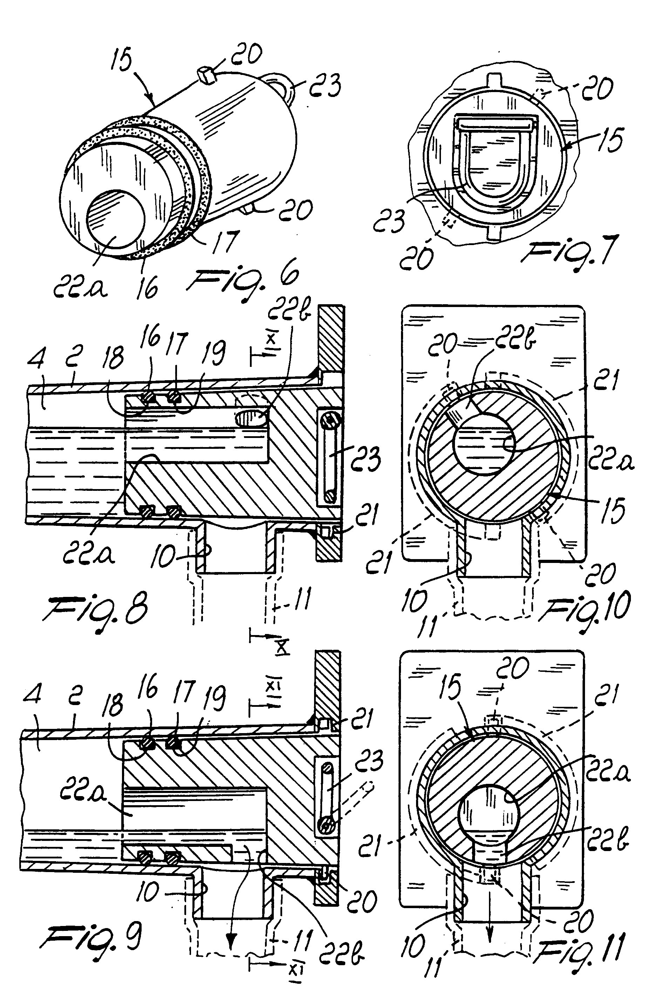

According to another embodiment the plug may be made as shown in figures from 6 to 11, where the plug is indicated as a whole by means of reference numeral 15, while the boiler is indicated by the same numerals as in figures 1-5.

In the second embodiment plug 15 shows, as the relevant part of the vaporizing chamber 4, a slightly conical shape, widening towards the outside.

In such embodiment sealing means may consist simply of one or more annular sealings 16 and 17 fitted to the outside of plug into suitable seatings 18 and 19.

In this case the plug is coupled to the boiler by means of a bayonet coupling with dogs 20 on the outside of plug, engaging with splines 21 which are defined near to the edge of opening 7. In this way it is possible to carry out a partial rotation of the plug around it axis, as is better described later.

Inside plug 15 there is advantageously defined a connection duct having a first axial part 22a which communicates with the vaporizing chamber and a second part 22b, which extends transversely and that, when the plugs rotates around its axix, connects with drain channel 11, realizing the connection of vaporizing chamber 4 with said drain channel.

In order to easy rotation of plug 15 and its removal, on the outside of it there is provided for an extractable handle 23.

The use of the steam generator according to the invention, during maintenance operations, is as follows.

With a plug 8, as shown in figures from 1 to 5, to clean the vaporizing chamber 4 the sealing ring 9 is relaxed by means of eccentric lever 13, so that plug 8 no more fits to the vaporizing chamber walls and remaining water, passing between the plug and the walls, gets to drain channel 11. Then plug 8 is removed from the boiler so to allow the access to the vaporizing chamber 4, which may be easily cleaned, for instance by means of a tube brush. At the end plug 8 is again inserted in opening 7 and, by means of the eccentric lever 13, the tight fitting between plug and walls is restored.

In the case of plug 15, as shown in figures from 6 to 11, to obtain the draining of the remaining water it is sufficient to rotate plug 15 until the mouth of part 22b, which normally is above the water level, is brought in correspondence of drain channel 11, still leaving the plug in the boiler. At the end of the drain, plug 15 is removed and the vaporizing chamber 4 is cleaned.

It has been practically ascertained that the steam generator according to te invention fulfils very well the assigned task because, as the cleaning of the vaporizing chamber may be performed periodically in a simple and quick way, it is possible to keep high the efficiency grade of the boiler. Consequently, the working life of the steam generator according to the invention is greatly longer then that of the known type generators, and waste of energy is avoided.

The used materials, and the sizes, may be changed according to the needs and the state of the art.

## Claims

1. Steam generator for a cooking oven comprising a boiler (2) having heating means (3) and defining internally a vaporizing chamber (4) which has a water inlet pipe (5), a steam outlet (6) and an access opening (7) defined in a longitudinal end of the vaporizing chamber (4) and watertightly closed in use by way of a plug (8,15), whereby the inside of said vaporizing chamber extends inwardly from the inner portion of said plug (8,15), characterised in that
- in the lowermost part of said vaporizing chamber (4) a drain outlet (10) is defined in the zone of the vaporizing chamber (4) proximate to said access opening (7), the inner portion of said plug (8,15) extending inwardly beyond said drain outlet (10);
- said plug (8,15) has sealing means (9,16,17) cooperating with the internal wall of the vaporizing chamber (4), whereby said drain outlet (10) is defined between said access opening (7) and said sealing means;
- in the outer end face of said plug (8,15) a grip (13,23) or grip and lever arrangement (13,14) is provided for manoeuvring the position of the plug and thereby of a connection channel (22a,22b) formed in the inner portion of said plug (8,15) or for operating said sealing means (9) in order to connect said drain outlet (10) with the inside of the vaporizing chamber (4) while said plug (8,15) remains in said access opening.

2. Steam generator according to claim 1, characterised in that the operation of said grip and lever arrangement (13,14) is apt at producing the radial expansion of said sealing means (9).

3. Steam generator according to claim 2, characterised in that said plug (8) is made up of two parts (8a, 8b) axially movable against each other, said sealing means (9) being located in an annular groove (12) between said two parts (8a, 8b), said grip and lever arrangement (13,14) acting on one of said two parts (8b) determining the axial compression and consequently the radial expansion of said sealing means (9).

4. Steam generator according to claim 1, characterised in that the inlet portion (22a) of said connection channel (22a,22b) is in communication with said vaporizing chamber (4), whereas the outlet portion (22b) of said connection channel (22a,22b) can be brought, by a partial rotation of the plug (15) around its axis, into correspondence with said drain outlet (10).

5. Steam generator according to claim 1, characterised in that said plug (15) comprise a quick release coupling mechanism of the bayonet joint type, comprising at least two projections (20), protruding from the plug, and at least two corresponding splines (21), defined within the body of the boiler near said access opening (7).

6. Steam generator according to claim 3, characterised in that said grip and lever arrangement comprises an eccentric lever (13) pivoted to a grip (14), for moving one of said two parts (8b) of said plug (8) in respect to the other part and consequently producing the engagement or the disengagement of said sealing means (9) with the internal wall of said chamber (4).

7. Steam generator according to at least one of the previous claims, characterised in that said plug (8,15) is of a slightly conical shape, widening towards the external of said access opening (7).

8. Steam generator according to at least one of the previous claims, characterised in that said sealing means (9,16,17) are ring-shaped sealings and that said plug (15) presents at least two of said ringshaped sealings.

## Patentansprüche

1. Dampferzeuger für einen Kochofen, der einen Boiler (2) mit Heizeinrichtungen (3) und im Inneren eine Verdampfungskammer (4) aufweist, die eine Wasserzuführleitung (5), einen Dampfauslaß (6) und eine Zugriffsöffnung (7) besitzt, welche in einem länglichen Ende der Verdampfgungskammer (4) angeordnet ist und mittels eines Verschlußstopfens (8, 15) im Gebrauch wasserdicht verschlossen ist, wobei das Innere der Verdampfungskammer (4) sich vom inneren Teil des Verschlußstopfens (8, 15) nach innen erstreckt, **dadurch gekennzeichnet**, daß
- im am tiefsten gelegenen Teil der Verdampfungskammer (4) ein Entleerungsauslaß (10) in der Verdampfungskammer (4), in dem Abschnitt, der der Zugriffsöffnung (7) folgt, angeordnet ist und sich der innere Teil des Verschlußstopfens (8, 15) nach innen über den Entleerungsauslaß (10) hinaus erstreckt;
- der Verschlußstopfen (8, 15) Dichtungsmittel (9, 16, 17) aufweist, welche mit der inneren Wand der Verdampfungskammer (4) zusammenwirken, wobei der Entleerungsauslaß (10) zwischen der Zugriffsöffnung (7) und den Dichtungsmitteln (9, 16, 17) angeordnet ist;
- an der äußeren Oberfläche des Verschlußstopfens (8, 15) ein Griff (13, 23) oder eine Anordnung von Betätigungselement und Hebel (13, 14) vorgesehen ist, um die Stellung des Verschlußstopfens (8, 15) und dadurch auch die eines Verbindungskanals (22a, 22b), der im inneren Teil des Verschlußstopfens (8, 15) angeordnet ist, einzustellen oder um die Dichtungsmittel (9) zu betätigen, um den Entleerungsauslaß (10) mit dem Inneren der Verdampfungskammer (4) zu verbinden, während der Verschlußstopfen (8, 15) in der Zugriffsöffnung (7) verbleibt.

2. Dampferzeuger nach Anspruch 1, **dadurch gekennzeichnet**, daß die Bedienung der Anordnung von Betätigungselement und Hebel (13, 14) geeignet ist, eine radiale Ausdehnung der Dichtungsmittel (9) zu bewirken.

3. Dampferzeuger nach Anspruch 2, **dadurch gekennzeichnet**, daß der Verschlußstopfen (8) aus zwei Teilen (8a, 8b) besteht, welche axial gegeneinander bewegbar sind, wobei das Dichtungsmittel (9) in einer ringförmigen Nut (12) zwischen den Teilen (8a, 8b) angeordnet ist und wobei die Anordnung von Betätigungselement und Hebel (13, 14) auf eines (8b) der zwei Teile einwirkt und so die axiale Kompression und folglich auch die radiale Ausdehnung des Dichtungsmittels (9) bewirkt.

4. Dampferzeuger nach Anspruch 1, **dadurch gekennzeichnet**, daß der Einlaßteil (22a) des Verbindungskanals (22a, 22b) mit der Verdampfungskammer (4) verbunden ist, während der Auslaßteil (22b) des Verbindungskanals (22a, 22b) durch eine Teildrehung des Verschlußstopfens (15) um seine Achse in Wirkverbindung mit dem Entleerungsauslaß (10) gebracht werden kann.

5. Dampferzeuger nach Anspruch 1, **dadurch gekennzeichnet**, daß der Verschlußstopfen (15) einen schnell lösbaren Kopplungsmechanismus des Bajonett-Typs (Bajonett-Verschluß) umfaßt, welcher mindestens zwei Vorsprünge (20), welche vom Verschlußstopfen abstehen und mindestens zwei korrespondierende Nuten aufweist, welche im Grundkörper des Boilers nahe der Zugriffsöffnung (7) angeordnet sind.

6. Dampferzeuger nach Anspruch 3, **dadurch gekennzeichnet**, daß die Anordnung von Betätgungselement und Hebel einen exzentrisch angeordneten Hebel (13) umfaßt, der um einen Griff (14) geschwenkt ist, um einen (8b) der zwei Teile des Verschlußstopfens (8) in bezug auf den anderen Teil zu bewegen und folglich ein Zusammenwirken oder Nichtzusammenwirken der Dichtungsmittel (9) mit der inneren Wand der Kammer (4) zu bewirken.

7. Dampferzeuger nach mindestens einem der vorstehenden Ansprüche, **dadurch gekennzeichnet**, daß der Verschlußstopfen (8, 15) von leicht konischer Gestalt ist, wobei sich der Verschlußstopfen (8, 15) nach dem äußeren Ende der Zugriffsöffnung (7) aufweitet.

8. Dampferzeuger nach mindestens einem der vorstehenden Ansprüche, **dadurch gekennzeichnet**, daß Dichtungsmittel (9, 16, 17) ringförmige Dichtungen sind und daß der Verschlußstopfen (15) mindestens zwei der ringförmigen Dichtungen aufweist.

## Revendications

1. Générateur de vapeur pour four de cuisson, comportant une chaudière (2) ayant un dispositif (3) de chauffage et délimitant à l'intérieur une chambre (4) de vaporisation qui possède un tube (5) d'entrée d'eau, une sortie (6) de vapeur et une ouverture (7) d'accès délimitée à une extrémité longitudinale de la chambre (4) de vaporisation et fermée de manière étanche pendant l'utilisation par un bouchon (8, 15), l'intérieur de la chambre de vaporisation étant disposé vers l'intérieur depuis la partie interne du bouchon (8, 15), caractérisé en ce que
- à la partie la plus basse de la chambre de vaporisation (4), une sortie de purge (10) est délimitée dans la zone de la chambre (4) de vaporisation proche de l'ouverture d'accès (7), la partie interne du bouchon (8, 15) étant tournée vers l'intérieur au-delà de la sortie (10) de purge,
- le bouchon (8, 15) comporte un dispositif d'étanchéité (9, 16, 17) coopérant avec la paroi interne de la chambre de vaporisation (4) de manière que la sortie (10) de purge soit délimitée entre l'ouverture d'accès (7) et le dispositif d'étanchéité, et
- à la face d'extrémité externe du bouchon (8, 15), un organe de saisie (13, 23) ou un ensemble à organe de saisie et levier (13, 14) est disposé pour la manoeuvre de la position du bouchon et ainsi d'un canal (22a, 22b) de connexion formé à la partie interne du bouchon (8, 15) ou pour la manoeuvre du dispositif d'étanchéité (9) afin que la sortie de purge (10) soit connectée à l'intérieur de la chambre de vaporisation (4) alors que le bouchon (8, 15) reste dans l'ouverture d'accès.

2. Générateur de vapeur selon la revendication 1, caractérisé en ce que le fonctionnement de l'ensemble à organe de saisie et levier (13, 14) permet la dilatation radiale du dispositif d'étanchéité (9).

3. Générateur de vapeur selon la revendication 2, caractérisé en ce que le bouchon (8) est formé de deux parties (8a, 8b) mobiles axialement l'une contre l'autre, le dispositif d'étanchéité (9) étant placé dans une gorge annulaire (12) entre les deux parties (8a, 8b), l'ensemble à organe de saisie et levier (13, 14) agissant sur l'une des deux parties (8b) en déterminant la compression axiale et en conséquence la dilatation radiale du dispositif d'étanchéité (9).

4. Générateur de vapeur selon la revendication 1, caractérisé en ce que la partie d'entrée (22a) du canal de connexion (22a, 22b) communique avec la chambre de vaporisation (4), alors que la partie de sortie (22b) du canal de connexion (22a, 22b) peut être mise en position correspondant à la sortie de purge (10) par rotation partielle du bouchon (15) autour de son axe.

5. Générateur de vapeur selon la revendication 1, caractérisé en ce que le bouchon (15) comporte un mécanisme d'accouplement à libération rapide du type à raccord à baïonnette, comprenant au moins deux saillies (20) qui dépassent du bouchon, et au moins deux cannelures correspondantes (21) délimitées dans le corps de la chaudière près de l'ouverture d'accès (7).

6. Générateur de vapeur selon la revendication 3, caractérisé en ce que l'ensemble à organe de saisie et levier comporte un levier excentrique (13) articulé sur un organe de saisie (14) et destiné à déplacer l'une des deux parties (8b) du bouchon (8) par rapport à l'autre partie et à provoquer en conséquence la coopération du dispositif (9) d'étanchéité avec la paroi interne de la chambre (4) ou leur séparation.

7. Générateur de vapeur selon l'une au moins des revendications précédentes, caractérisé en ce que le bouchon (8, 15) a une forme légèrement conique, s'élargissant vers l'extérieur de l'ouverture d'accès (7).

8. Générateur de vapeur selon l'une au moins des revendications précédentes, caractérisé en ce que le dispositif d'étanchéité (9, 16, 17) comprend des joints d'étanchéité de forme annulaire, et le bouchon (15) comporte au moins deux joints d'étanchéité de forme annulaire.
